# DEMANDE DE BREVET EUROPEEN

(11) **EP 0 838 711 A1**
(43) Date de publication de la demande: **29.04.1998**
(21) Numéro de dépôt: 97420197.2
(22) Date de dépôt: 22.10.1997
(51) Int. Cl.: G02C 5/22

(54) **Monture de lunettes en fil métallique**

(30) Priorité: 23.10.1996 FR 9613146
(71) Demandeur: Airess, 01100 Oyonnax (FR)
(72) Inventeur: Sonthonnax, Alexandre, Marchon, 01100 Oyonnax (FR)
(74) Mandataire: Myon, Gérard Jean-Pierre

(57) **Abrégé**

Monture de lunettes comprenant au moins une patte (2), fixée par rapport à un verre (1) et supportant une branche (10) articulée, ladite patte et ladite branche étant réalisées en fil métallique, caractérisée en ce que ladite branche comprend un bloc parallélépipédique (11) percé d'un orifice central (12), ledit orifice étant apte à coiffer un ergot (4) appartenant à ladite patte, de façon à constituer, avec ledit ergot, une charnière, ladite patte comprenant une première portion (5) sensiblement perpendiculaire audit ergot et une seconde portion (6) sensiblement perpendiculaire audit ergot, lesdites première et seconde portions étant décalées angulairement et reliées par une troisième portion (7) de ladite patte sensiblement parallèle audit ergot, ladite première portion étant parallèle et en appui contre une face (11a, 11b) dudit bloc parallélépipédique dans les positions rabattue et complètement déployée de ladite branche.

## Description

L'invention a trait à une monture de lunettes.

Les montures de lunettes doivent être légères afin de procurer à l'utilisateur une sensation agréable de confort. Il est connu de réaliser les montures de lunettes en fil métallique qui sont particulièrement légères. Par ailleurs, le système d'articulation des branches par rapport au reste de la monture doit être simple afin de maintenir le prix de revient de la monture à un niveau acceptable, tout en permettant avantageusement le démontage de la branche par rapport au reste de la monture afin de procéder à son échange, par exemple en cas de rupture ou de déformation.

D'autre part, il est avantageux de prévoir que les branches soient rappelées élastiquement vers leur position d'ouverture normale, c'est-à-dire complètement déployée, ou vers leur position rabattue, de telle sorte que l'utilisateur peut relâcher la branche en fin de course lors du pivotement d'une de ces positions vers l'autre et que la branche est automatiquement positionnée de façon correcte. Les systèmes de ce genre sont généralement complexes, donc fragiles et onéreux.

L'invention vise à fournir une monture de lunettes simple, robuste et permettant le rappel automatique de la branche en position d'ouverture normale ou en position fermée.

Dans cet esprit, l'invention concerne une monture de lunettes comprenant au moins une patte, fixée par rapport à un verre et supportant une branche articulée, ladite patte et ladite branche étant réalisées en fil métallique, caractérisée en ce que ladite branche comprend un bloc parallélépipédique percé d'un orifice central, ledit orifice étant apte à coiffer un ergot vertical appartenant à ladite patte, de façon à constituer, avec ledit ergot, une charnière, ladite patte comprenant une première portion sensiblement perpendiculaire audit ergot et une seconde portion sensiblement perpendiculaire audit ergot, lesdites première et seconde portions étant décalées angulairement et reliées par une troisième portion de ladite patte sensiblement parallèle audit ergot, ladite première portion étant parallèle et en appui contre une face dudit bloc parallélépipédique dans les positions rabattue et complètement déployée de ladite branche.

Grâce à l'invention, le bloc parallélépipédique appartenant à la branche sert de butée au mouvement de celle-ci, entre ses positions rabattue et complètement déployée en étant en appui contre une portion de la patte de la monture. Lorsqu'aucune face du bloc parallélépipédique n'est en appui contre les branches, l'effort élastique exercé sur la branche grâce au caractère déformable des fils métalliques constituant la patte et la branche a tendance à ramener celle-ci dans une position où une face du bloc est en appui contre la portion correspondante de la patte.

Selon un premier mode de réalisation de l'invention, le bloc parallélépipédique est entouré, sur au moins deux de ses faces adjacentes, par une partie du fil métallique constituant la branche.

Selon un second mode de réalisation de l'invention, le bloc parallélépipédique appartient à un ensemble monobloc comprenant une collerette externe. Cet ensemble monobloc peut être réalisé, notamment, par usinage avec une bonne précision, ce qui permet un positionnement précis du bloc parallélépipédique par rapport à la patte de la monture.

Dans ce cas, selon un aspect avantageux de l'invention, la collerette externe est pourvue d'un orifice de réception de l'extrémité de la branche. Ceci facilite la soudure de la branche sur l'ensemble monobloc comprenant le bloc parallélépipédique et la collerette.

Selon un autre aspect avantageux de l'invention, la partie du fil métallique entourant le bloc parallélépipédique ou la collerette de l'ensemble monobloc est disposée à une hauteur, par rapport à la base du bloc, telle que sa face supérieure est en appui contre la surface inférieure de la première portion de la patte. Grâce à cet aspect de l'invention, la branche est fermement maintenue en position montée sur la patte par la coopération du fil métallique entourant le bloc parallélépipédique et de la première portion de la patte. Ceci permet un verrouillage du bloc parallélépipédique par rapport à la patte de la monture. On évite ainsi un démontage intempestif de la charnière réalisée grâce à l'invention.

Selon un autre aspect avantageux de l'invention, la première et la seconde portions de la patte sont mobiles l'une par rapport à l'autre par pivotement autour de l'axe principal de la troisième portion de cette patte. Cet aspect de l'invention autorise de décaler angulairement la seconde portion et donc l'ergot qui la termine, par rapport à la première portion, de façon à permettre la rotation du bloc parallélépipédique et à dégager le fil entourant le bloc parallélépipédique. Ceci permet les mouvements de la branche, le montage et le démontage de la branche par rapport à la patte.

Selon un autre aspect avantageux de l'invention, la branche comprend une portion non parallèle aux faces du bloc parallélépipédique, la zone de raccordement entre cette portion et la partie principale de la branche ou entre deux portions non parallèles aux faces du bloc étant apte à venir en appui contre la troisième portion de la patte en cas d'ouverture forcée de la branche. Cet aspect de l'invention permet de garantir que, même lorsque l'ouverture de la branche est forcée au-delà de sa position normale, une butée efficace est réalisée grâce à la coopération de la branche et de la patte, ce qui soulage l'articulation de la branche sur la patte et évite une déformation plastique de ses constituants.

L'invention sera mieux comprise et d'autres avantages de celle-ci apparaîtront plus clairement à la lumière de la description qui va suivre de deux modes de réalisation d'une monture de lunettes conforme à son principe, donnée uniquement à titre d'exemple et faite en référence aux dessins annexés dans lesquels :
- la figure 1 est une vue en perspective d'une partie d'une monture de lunettes conforme à l'invention avant le montage de la branche sur la partie fixe de la monture ;
- la figure 2 est une vue analogue à la figure 1, alors que la branche est montée ;
- la figure 3 est une vue de dessus partielle de la monture de la figure 2, la branche étant en position déployée et le verre étant en coupe ;
- la figure 4 est une vue en coupe selon la ligne IV-IV à la figure 3 ;
- la figure 5 est une vue de dessus des éléments constitutifs essentiels du dispositif de la figure 2 lorsque la branche est dans une position intermédiaire entre sa position déployée et une position rabattue ;
- la figure 6 est une vue analogue à la figure 5 alors que la branche est en position rabattue ;
- la figure 7 est une vue analogue à la figure 5 alors que la branche est en position d'ouverture forcée au-delà de sa position normale ;
- la figure 8 est une vue analogue à la figure 5 lorsque la branche est en cours de montage ou de démontage par rapport à la patte support ;
- la figure 9 est une vue analogue à la figure 3 pour une monture de lunettes conforme à un second mode de réalisation de l'invention ;
- la figure 10 est une vue en coupe selon la ligne X-X à la figure 9 et
- la figure 11 est une vue en perspective éclatée d'un ensemble monobloc et de l'extrémité d'une branche appartenant à la monture des figures 9 et 10.

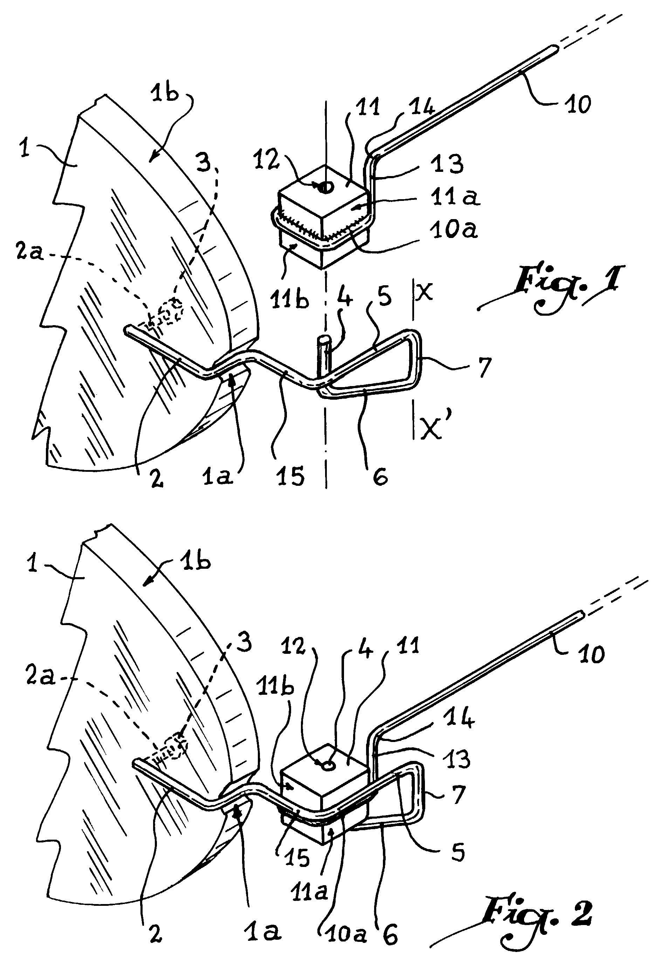

A la figure 1, un verre de lunettes 1 supporte une patte 2 réalisée à partir d'un fil métallique rigide, cette patte étant pourvue d'une extrémité filetée 2a traversant le verre 1 et immobilisée par rapport à celui-ci grâce à un écrou 3 coopérant avec l'extrémité 2a. La patte 2 longe la face avant du verre 1 et traverse une encoche 1a du bord 1b du verre 1, de sorte que la patte 2 est fermement immobilisée par rapport au verre 1.

La patte 2 se termine à son extrémité libre par un ergot 4 qui, en position normale d'utilisation de la paire de lunettes, est vertical et orienté vers le haut. Entre son passage dans l'encoche 1a et l'ergot 4, la patte 2 est conformée de telle sorte qu'elle présente une première portion 5 sensiblement perpendiculaire à l'ergot 4 et une seconde portion 6, elle aussi sensiblement perpendiculaire à l'ergot 4.

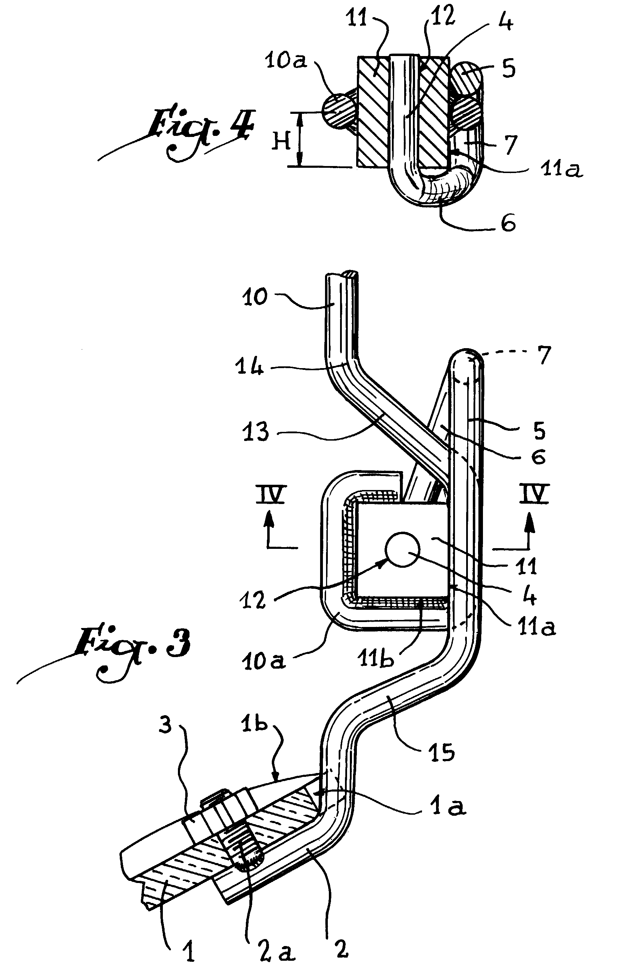

Les portions 5 et 6 sont reliées par une troisième portion 7, sensiblement parallèle à l'ergot 4. Les portions 5 et 6 sont disposées l'une au-dessus de l'autre mais ne sont pas parallèles de sorte que, comme il apparaît, par exemple, à la figure 3, l'ergot 4 est décalé vers l'intérieur de la monture par rapport à la portion 5 de la patte 2.

Une branche 10 appartenant à cette monture comprend un bloc parallélépipédique 11 percé d'un orifice central 12 apte à coiffer l'ergot 4 en position montée représentée à la figure 2. On note 11a et 11b les faces latérales du bloc 11 visibles aux figures 1 et 2. En pratique, ce bloc a la forme d'un dé ou d'un cube. Comme il apparaît plus clairement à la figure 3, lorsque la branche 10 est dans sa position complètement déployée, la face lla du bloc 11 est en appui contre la portion 5 de la patte 2 de sorte que la position de la branche 10 est déterminée avec précision par la coopération du bloc 11 et de la patte 2.

Le bloc 11 est entouré sur au moins deux de ses côtés adjacents par le fil métallique constituant la branche 10. En pratique, il est particulièrement avantageux de souder une partie 10a du fil métallique autour du bloc 11 sur l'essentiel de sa périphérie, c'est-à-dire sur trois côtés et demi. Le bloc 11 est ainsi rendu solidaire de façon robuste du fil constituant la branche 10.

Comme il apparaît plus clairement à la figure 4, la partie 10a du fil métallique qui entoure le bloc 11 est disposée à une hauteur H par rapport à la base du bloc 11 telle que, lorsque la branche 10 est montée, la surface supérieure du fil 10a est en appui contre la surface inférieure de la portion 5, ce qui permet de créer une force de réaction à un effort qui aurait tendance à dégager l'orifice 12 vers le haut par rapport à l'ergot 4. Ainsi, la coopération de la portion 5 et de la partie 10a de la branche 10 permet un verrouillage de la branche 10 en position montée.

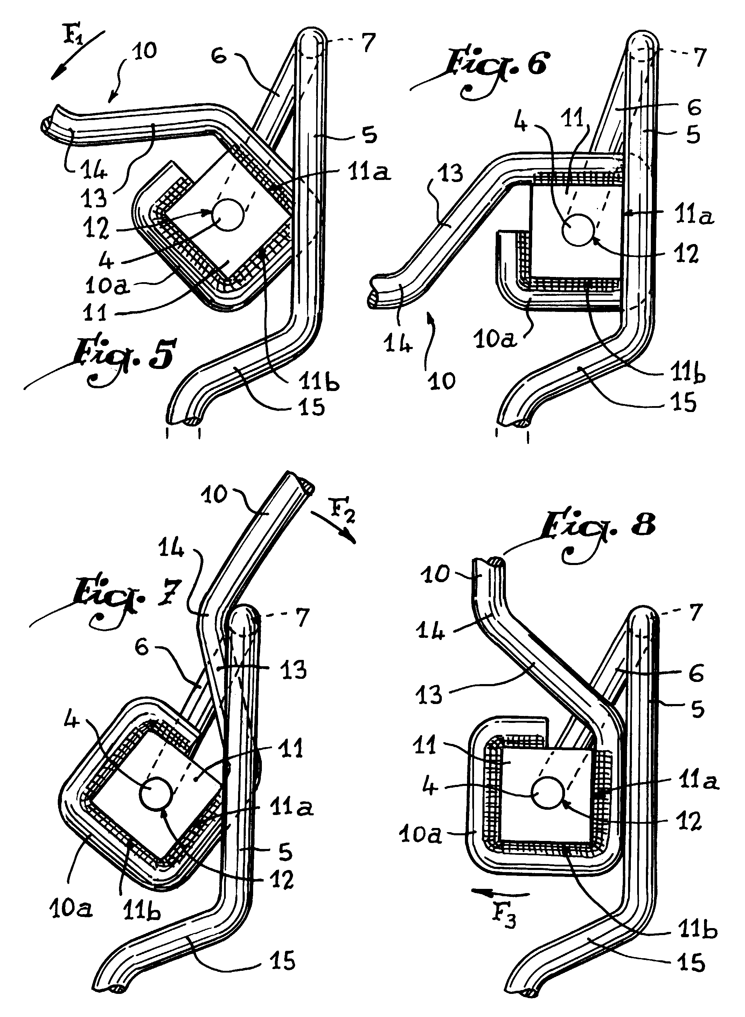

Comme il apparaît plus clairement à la figure 5, lorsqu'un effort F₁ est exercé sur l'extrémité non représentée de la branche 10 afin de la rabattre en direction des verres de la monture, le bloc parallélépipédique 11 subit la même rotation que la branche 10, de sorte qu'il repose par son arête verticale reliant les faces 11a et 11b contre la portion 5. Ceci est rendu possible grâce à un léger débattement angulaire de la portion 6 par rapport à la portion 5 autour de l'axe principal XX', visible à la figure 1, de la portion 7. En effet, la demi-diagonale du bloc parallélépipédique 11, qui sépare le centre de l'ergot 4 de la portion 5 dans la position de la figure 5 est plus longue que la moitié de l'arête supérieure de la face 11b, qui les sépare dans la position de la figure 3. Le débattement angulaire des portions 5 et 6 est effectué grâce à l'élasticité du fil métallique constituant la patte 2. Ceci crée une force de réaction élastique qui tend à ramener le bloc 11 dans une position dans laquelle l'une de ses faces repose contre la portion 5. Ainsi dès que, grâce à l'effort F₁, on a dépassé la position de la figure 5, la branche 10 est automatiquement amenée dans la position de la figure 6 dans laquelle la face 11b repose contre la portion 5 de la patte 2. Dans la position rabattue de la figure 6, la position de la branche 10 est donc déterminée avec précision par la coopération du bloc 11 et de la patte 2. Dans cette position, la portion 6 de la patte 2 a repris sa position normale par rapport à la portion 5, de sorte qu'aucune contrainte élastique permanente n'est appliquée sur la patte 2.

Le fonctionnement est inversé lorsqu'on passe de la position rabattue de la figure 6 à la position déployée de la figure 3.

La branche 10 comprend une portion 13 qui n'est parallèle à aucune des faces du bloc 11. Cette portion 13 permet de rapprocher la partie principale de la branche 10 des tempes de l'utilisateur, ce qui améliore l'aspect esthétique de la monture et peut générer une sensation de confort supplémentaire. On note 14 la zone de raccordement entre la portion 13 et la partie principale de la branche 10.

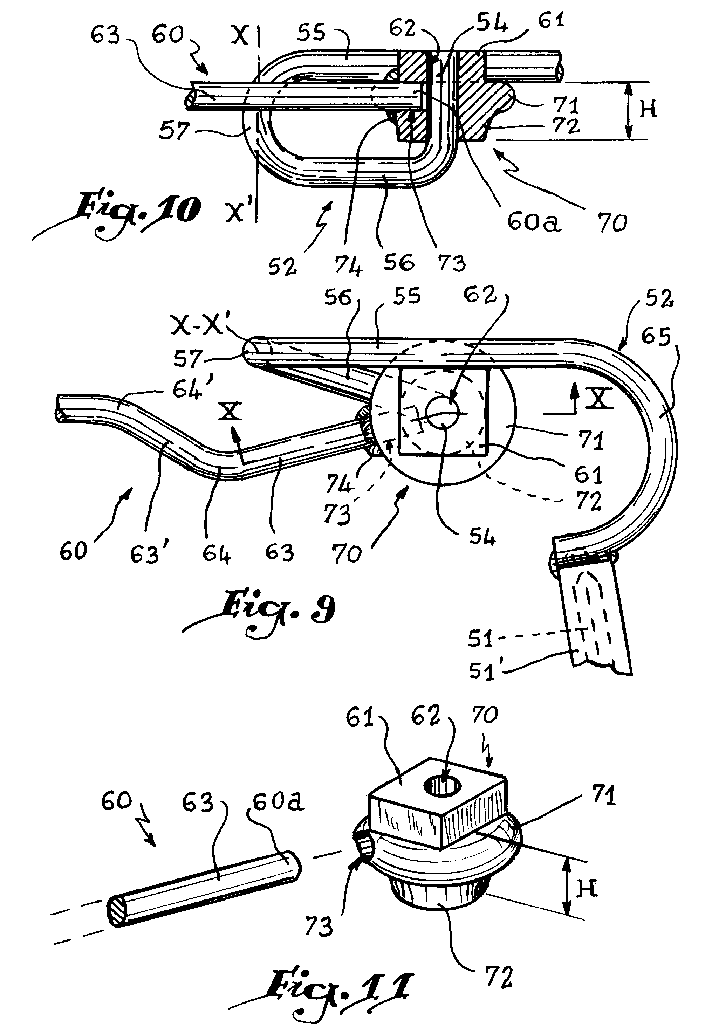

Comme il apparaît plus clairement à la figure 7, lorsqu'une ouverture forcée de la branche 10 est réalisée par un effort F₂, par exemple en cas de mauvaise manipulation, la zone 14 vient en appui contre la portion 7, de sorte que la patte 2 constitue une butée limitant le mouvement de pivotement de la branche 10. Si le mouvement de la branche 10 continue au-delà de la position de figure 7, c'est-à-dire si l'effort F₂ est exercé au-delà de la position de butée, la branche 2 peut se déformer au niveau de la zone de raccordement de la portion 5 avec une portion 15 de la branche 2 dirigée vers l'encoche la du verre 1. Grâce à cette géométrie de la branche 10 et de la patte 2, l'effort F₂ ne risque pas de déformer la patte 2 au-delà de la portion 15, ce qui pourrait avoir des conséquences négatives sur la fixation de la patte 2 sur le verre 1, voire sur le verre 1 lui-même. Ainsi, la patte 2 est apte à absorber les efforts que lui transmet la branche 10, y compris en cas de mauvaise manipulation.

Lorsqu'il est souhaitable de démonter la branche 10 ou lorsque l'on souhaite mettre en place la branche 10, on écarte l'ergot 4 de la portion 5 de la branche 2 grâce à un effort F₃ qui apparaît à la figure 8, de telle sorte que les mouvements verticaux de la branche 10 ne sont plus limités par la coopération de la partie 10a du fil de la branche 10 et par la portion 5. La branche 10 peut être montée et démontée par rapport à la patte 2 sans utilisation d'un outillage spécifique, ce qui facilite les opérations de réparation d'une monture de ce type.

Le fil constituant la branche 10 peut être en acier, en laiton ou en alliage à base d'aluminium et de façon générale dans tout matériau métallique présentant des propriétés élastiques et esthétiques adaptées à son utilisation dans une monture de lunettes.

Dans le second mode de réalisation de l'invention représenté aux figures 9 à 11, les éléments analogues à ceux du mode de réalisation des figures précédentes portent des références identiques augmentées de 50. Un verre de lunette 51 est encerclé dans une monture 51' sur laquelle est soudée une patte 52 réalisée à partir d'un fil métallique rigide. La patte 52 se termine à son extrémité distance de la monture 51' par un ergot vertical 54 dirigé vers le haut en position d'utilisation de la lunette. La patte 52 est conformée de telle sorte qu'elle présente une première portion 55 sensiblement perpendiculaire à l'ergot 54 et une seconde portion 56, elle aussi sensiblement perpendiculaire à l'ergot 54. Les portions 55 et 56 sont reliées par une troisième portion 57 sensiblement parallèle à l'ergot 54. L'orientation relative des portions 55 et 56 qui ne sont pas parallèles peut varier par leur pivotement autour de l'axe principal XX' de la portion 57.

Une branche 60 est prévue pour être articulée sur la patte 52. Pour ce faire, un ensemble monobloc 70, pourvu d'un orifice central 62 de réception de l'ergot 54 et plus particulièrement visible à la figure 11, est constitué par usinage et comprend un bloc parallélépipédique 61, une collerette externe 71 et une partie inférieure en forme de tronc de cône 72. La collerette 71 est pourvue d'un orifice 73 de réception de l'extrémité 60a de la branche 60.

La branche 60 peut ainsi être soudée sur l'ensemble 70 comme représenté par le cordon de soudure 74 aux figures 9 et 10 lorsque l'extrémité 60a de la branche 60 a été introduite dans l'orifice 73. Comme précédemment, la hauteur H de la collerette 71 par rapport à la base de l'ensemble 70 est telle que, lorsque la branche 60 est montée, la surface supérieure de la collerette 71 est en appui contre la surface inférieure de la portion 55 de la patte 52.

Le fonctionnement est sensiblement le même que celui décrit en référence avec la monture du mode de réalisation précédent. La branche 60 comprend une première portion 63 qui n'est parallèle à aucune des faces du bloc 61 en position rabattue ou complètement ouverte. La branche 60 comprend une seconde portion 63' également non parallèle aux faces du bloc 61. On note 64 la zone de raccordement entre les portions 63 et 63' et 64' la zone de raccordement entre la portion 63 et la partie rectiligne de la branche 60. Grâce à cette gémométrie de la branche 60 et de la patte 2, un effort d'ouverture excessif peut être absorbé car il en résulte un appui de la zone 64 sur la portion 57, ce qui induit une déformation élastique d'une portion courbe 65 de la branche 52. Le montage et le démontage de la branche sont analogues à ceux du mode de réalisation précédent.

L'invention est applicable quel que soit le mode de fixation de la patte par rapport au verre, en particulier lorsque la monture comprend un cercle entourant, partiellement ou complètement, chaque verre comme représenté aux figures 9 à 11.

## Revendications

1. Monture de lunettes comprenant au moins une patte (2 ; 52), fixée par rapport à un verre (1 ; 51) et supportant une branche (10 ; 60) articulée, ladite patte et ladite branche étant réalisées en fil métallique, caractérisée en ce que ladite branche comprend un bloc parallélépipédique (11 ; 61) percé d'un orifice central (12 ; 62), ledit orifice étant apte à coiffer un ergot (4 ; 54) appartenant à ladite patte, de façon à constituer, avec ledit ergot, une charnière, ladite patte comprenant une première portion (5 ; 55) sensiblement perpendiculaire audit ergot et une seconde portion (6 ; 56) sensiblement perpendiculaire audit ergot, lesdites première et seconde portions étant décalées angulairement et reliées par une troisième portion (7 ; 57) de ladite patte sensiblement parallèle audit ergot, ladite première portion étant parallèle et en appui contre une face (11a, 11b) dudit bloc parallélépipédique dans les positions rabattue et complètement déployée de ladite branche.

2. Monture de lunettes selon la revendication 1, caractérisée en ce que ledit bloc (11) parallélépipédique est entouré, sur au moins deux de ses faces adjacentes (11a, 11b), par une partie (10a) du fil métallique constituant ladite branche (10).

3. Monture de lunettes selon la revendication 2, caractérisée en ce que ladite partie (10a) dudit fil métallique est soudée sur ledit bloc (11) parallélépipédique.

4. Monture de lunettes selon la revendication 1, caractérisée en ce que ledit bloc parallélépipédique (61) appartient à un ensemble monobloc (70) comprenant une collerette externe (71).

5. Monture de lmunettes selon la revendication 4, caractérisée en ce que ladite collerette externe est pourvue d'un orifice (73) de réception d'une extrémité (60a) de ladite branche (60).

6. Monture de lunettes selon l'une des revendications 2 à 5, caractérisée en ce que ladite partie (10a) dudit fil métallique entourant ledit bloc (11) parallélépipédique ou ladite collerette (71) est disposée à une hauteur (H), par rapport à la base dudit bloc, telle que sa surface supérieure est en appui contre la surface inférieure de ladite première portion (5 ; 55) de ladite patte (2 ; 52).

7. Monture de lunettes selon la revendication 1, caractérisée en ce que lesdites première et seconde portions (5, 6 ; 55, 56) de ladite patte (2 ; 52) sont mobiles l'une par rapport à l'autre par pivotement autour de l'axe principal (XX') de ladite troisième portion (7 ; 57) de ladite patte.

8. Monture de lunettes selon la revendication 1, caractérisée en ce que ladite branche (10 ; 60) comprend une portion (13 ; 63, 63') non parallèle aux faces (11a, 11b) dudit bloc (11 ; 61) parallélépipédique, la zone de raccordement (14 ; 64') entre ladite portion (13) et la partie principale de ladite branche (10) ou entre deux portions (63, 63') non parallèles aux faces dudit bloc (61) étant apte à venir en appui contre ladite troisième portion (7 ; 57) de ladite patte (2 ; 52) en cas d'ouverture forcée de ladite branche.

9. Monture de lunettes selon la revendication 1, caractérisée en ce que ladite patte (2) longe la face avant dudit verre (1) correspondant et traverse une encoche (1a) du bord (1b) dudit verre.

10. Monture de lunettes selon la revendication 1, caractérisée en ce que ledit ergot (4 ; 54) est vertical et orienté vers le haut lorsque ladite monture est en position normale d'utilisation.
